Europäisches Patentamt

**European Patent Office**

**Office européen des brevets**

(19) ⑪ Numéro de publication: **0 083 270**
**B1**

(12) # FASCICULE DE BREVET EUROPÉEN

(45) Date de publication du fascicule du brevet:
**05.11.86**

(21) Numéro de dépôt: **82402307.1**

(22) Date de dépôt: **15.12.82**

(51) Int. Cl.⁴: **B 62 M 9/12**

(54) **Dérailleur à chape réglable pour pédalier.**

(30) Priorité: **30.12.81 FR 8124504**

(43) Date de publication de la demande:
**06.07.83 Bulletin 83/27**

(45) Mention de la délivrance du brevet:
**05.11.86 Bulletin 86/45**

(84) Etats contractants désignés:
**BE DE GB IT LU NL**

(56) Documents cité:
**FR-A-857 003**
**FR-A-1 ?18 883**
**FR-A-2 340 852**
**FR-A-2 443 373**
**US-A-4 237 743**

(73) Titulaire: **HURET ET SES FILS Société dite:, 60 Avenue Félix Faure, F-92000 Nanterre (FR)**

(72) Inventeur: **Coue, Maurice Emmanuel Louis, 6 Résidence du Vieux Puits, F-78810 Feucherolles (FR)**

(74) Mandataire: **Moncheny, Michel, c/o Cabinet Lavoix 2 Place d'Estienne d'Orves, F-75441 Paris Cedex 09 (FR)**

EP 0 083 270 B1

LIBER, STOCKHOLM 1986

## Description

La présente invention concerne les dérailleurs de pédalier pour bicyclettes.

Un dérailleur de pédalier comprend en général un organe mobile de guidage ou de déplacement de la chaîne, cet organe étant articulé sur un support destiné à être fixé au cadre de la bicyclette.

L'organe de déplacement et de guidage de la chaîne se présente sous la forme d'une chape de forme curviligne allongée, articulée par son âme sur le support.

L'âme de la chape relie les ailes de celle-ci à proximité de leur extrémité avant tandis qu'à leur extrémité arrière les ailes sont reliées entre elles par l'intermédiaire d'une entretoise interposée entre les ailes et fixée à celle-ci par un ensemble vis-écrou.

Les ailes de la chape qui constituent les moyens de déplacement transversal de la chaîne sont de largeurs différentes, l'aile extérieure destinée à déplacer la chaîne d'un plateau de plus grand diamètre vers un plateau de plus petit diamètre étant plus étroite que l'aile intérieure destinée à déplacer la chaîne d'un plateau de plus petit diamètre vers un plateau de plus grand diamètre.

On connait d'après le brevet Français FR-A-2443373 (correspondent au préambule de la revendication 1) un dérailleur de pédalier comportant une partie réglable en position, constituée par une pièce supplémentaire en forme de plaque articulée sur une des ailes de ce dérailleur. Cette plaque, destinée à assister le déplacement de la chaîne d'un plateau de grand diamètre vers un plateau de petit diamètre, est agencée pour être déplacée simultanément au réglage de la position transversale de la chape dans son ensemble par l'intermédiaire d'un dispositif de commande à câble classiquement prévu sur ce type de dérailleur.

Cependant, dans de nombreux cas, les dimensions en largeur des ailes de la chape et principalement de l'aile intérieure sont trop faibles pour permettre une venue en contact franche de la chape avec la chaîne lorsqu'il s'agit de déplacer celle-ci à partir d'un petit plateau.

L'invention vise à remédier à l'inconvénient précité des dérailleurs connus en créant un dérailleur qui permette d'obtenir un déplacement de la chaîne, d'un petit plateau vers un plateau de plus grand diamètre, qui soit plus net qu'avec les agencements de la technique antérieure.

Elle à donc pour objet un dérailleur de pédalier pour bicyclette comprenant un organe de guidage et de déplacement de la chaîne réalisé sous la forme d'une chape articulée par son âme sur un support destiné à être fixé au cadre de la bicyclette, l'une au moins des ailes de la chape présentant une partie réglable en position afin d'adapter la largeur de ladite aile au diamètre du petit plateau du pédalier, cette partie réglable en position étant constituée par une pièce supplémentaire en forme de plaque articulée autour d'un axe parallèle à l'axe du pétalier, sur ladite aile de la chape en un point de celle-ci, déraillleur caractérisé en ce qu'il est prévu des moyens de blocage de la pièce supplémentaire par rapport à ladite aile de la chape adaptés pour immobiliser cette pièce supplémentaire sur l'aile correspondante dans chaune des positions choisies de la pièce supplémentaire par rapport à ladite aile.

D'autres caractéristiques de l'invention apparai au cours de la description qui va suivre.

Aux dessins annexés, donnés uniquement à titre d'exemple:
- la Fig. 1 est une vue en élévation d'un premier mode de réalisation du dérailleur pour pédalier suivant l'invention;
- la Fig. 2 est une vue en élévation d'un second mode de réalisation du dérailleur pour pédalier suivant l'invention; et
- la Fig. 3 est une coupe suivant la ligne 3-3 de la Fig. 2.

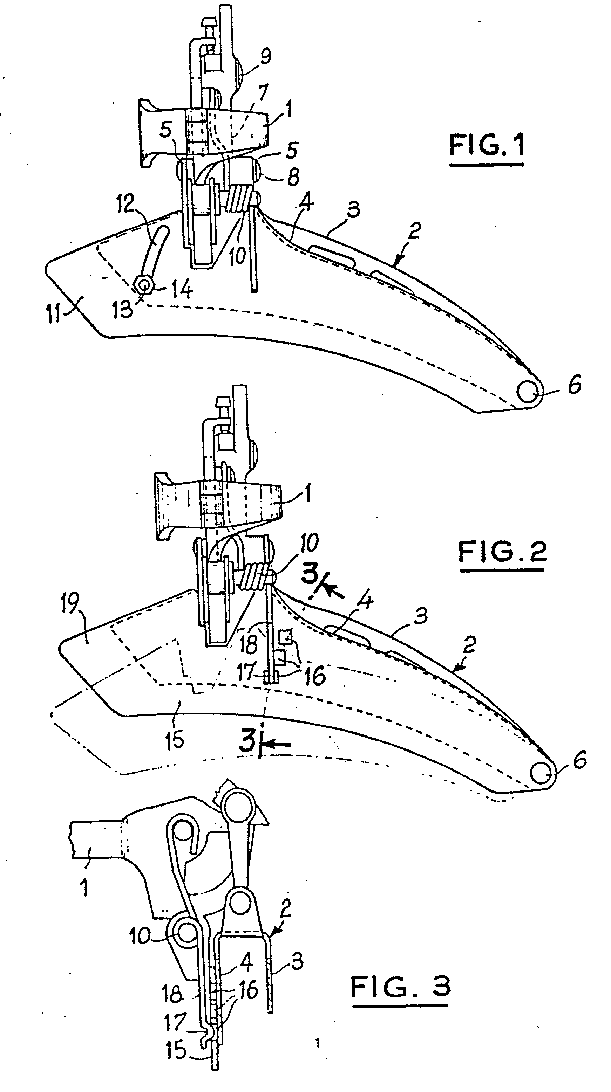

Le dérailleur pour pédalier représenté à la Fig. 1 comporte pricipalement un support 1 en forme de collier destiné à être fixé au cadre (non représenté) d'une bicyclette. Sur le support est articulée une chape 2 dont l'âme réunit les ailes 3 et 4 dans la partie avant de la chape et présente des pattes 5 rabattues à angle droit. A leur partie arrière, les ailes 3 et 4 de la chape sont réunies par un ensemble vis-écrou 6 avec interposition d'une entretoise non représentée. Entre les pattes 5 de l'âme de la chape, est articulée une pièce intermédiaire 7 montée à rotation au moyen d'un axe 8 et articulée elle-même sur le support 1 au moyen d'un axe 9. Un ressort de rappel 10 dont une extrémité prend appui sur l'aile 4 de la chape et dont l'autre extrémité est accrochée au support 1 maintient la chape en butée contre le support 1.

Sur la Fig. 1, le dérailleur suivant l'invention est tourné de manière à rendre visible l'aile intérieure 4 destinée à assurer le déplacement de la chaîne à partir d'un plateau de plus petit diamètre vers un plateau de diamètre supérieur.

Lorsque le petit plateau d'un pédalier de bicyclette présente un nombre de dents tel que ses dents supérieures et par conséquent la chaîne qu'elles portent eventuellement se trouve à une hauteur insuffisante pour que l'aile intérieure 4 de la chape présente une surface de contact assez importante pour assurer de façon franche le déplacement de la chaîne du petit plateau vers un plateau supérieure, il risque d'y avoir un retard entre la manoeuvre du dérailleur et le changement de rapport du pédalier. Par ailleurs, la chaine risque de se trouver un contact avec la chape sur une faible longuer de celle-ci, ce qui peut entraîner des défauts d'engrènement entre la chaîne et le plateau supérieur. Enfin, la chaîne risque de sauter purement et simplement.

Afin de remédier à ces inconvénients, sur l'aile intérieure 4 est montée une pièce supplémentaire 11, de forme analogue à celle de l'aile 4. La pièce 11 est articulée autour de la vis 6 de fixation des ailes 3 et 4 entre elles. A sa partie avant, la pièce 11 présente une lumière 12 traversée par une tige filetée 13 fixée à l'aile 4. Ainsi, la pièce 11 peut être réglée en hauteur par rapport à l'aile intérieure 4, de manière à adapter la largeur de cette aile aux dimensions du petit plateau du pédalier auquel le dérailleur doit être associé. Un écrou 14 coopérant avec la tige filetée 13 assure l'immobilisation de la pièce 11 dans sa position de réglage.

On voit par conséquent, que grâce à cet agencement, l'aile intérieure 4 de la chape peut présenter une surface de contact optimale avec la chaîne lorsque celle-ci se trouve sur le petit plateau du pédalier et ceci pour divers diamètres du petit plateau.

Dans l'exemple qui vient d'être décrit, la pièce supplémentaire 11 est constituée par une plaque de tôle insérée entre la surface de l'aile 4 et l'extrémité inférieure du ressort de rappel 10.

Une fois que le réglage en hauteur de la pièce supplémentaire 11 a été réalisée et que celle-ci a été immobilisée sur l'aile intérieure 4 au moyen de l'écrou 4, l'aile 4 et la pièce supplémentaire 11 forment un ensemble rigide.

Le mode de réalisation de la Fig.2 diffère de celui de la Fig.1 en ca qu'à l'aile intérieure 4 de la chape est associée une pièce supplémentaire 15 de forme allongée et incurvée semblable de l'aile 4, mais qui n'est plus fixée rigidement à cette aile 4. La pièce supplémentaire 15 est, comme la pièce 11 de la Fig.1, montée déplaçable angulairement autour de la vis 6 de fixation des ailes 3 et 4 entre elles. Mais son réglage en hauteur est assuré par la coopération de lumières 16 ménagées dans la pièce 15 à intervalles réguliers et disposées sur un cercle centré sur la vis 6 d'une part et de l'extrémité 17 de la branche intérieure 18 du ressort de rappel 10 d'autre part. L'extrémité 17 de la branche 18 est constituée par un bec qui pénètre dans une des lumières 16 et assure l'immobilisation de la plaque 15 dans la position de réglage souhaitée, et le maintien élastique de la pièce 15 contre l'aile 4. Ainsi, la pièce supplémentaire 15, outre qu'elle permet de régler la largeur utile de l'aile intérieure 4 de la chape, constitue par sa partie avant 19 en saillie par rapport à l'aile 4, un élément élastique dont l'écartement momentané lors de l'entrée en contact de l'aile 4 avec la chaîne favorise le déplacement transversal de celle-ci d'un plateau de petit diamètre vers un plateau de diamètre supérieur.

Bien que dans les modes de réalisation qui viennent d'être décrits, l'une des ailes seulement de la chape présente une plaque supplémentaire réglable en hauteur, un tel agencement peut également être envisagé pour l'autre des ailes de la chape.

**Revendications**

1. Dérailleur de pédalier pour bicyclette comprenant un organe de guidage et de déplacement de la chaîne réalisé sous la forme d'une chape (2) articulée par son âme sur un support (1) destiné à être fixé au cadre de la bicyclette, l'une au moins (4) des ailes de la chape (2) présentant une partie (11; 15) réglable en position afin d'adapter la largeur de ladite aile (4) au diamètre du petit plateau du pédalier, cette partie réglable en position étant constituée par une pièce supplémentaire (11; 15) en, forme de plaque articulée, autour d'un asce parallèle à l'asce du pétalier, sur ladite aile (4) de la chape en un point (6) de celle-ci, caractérisé en ce qu'il est prévu des moyens (12, 13, 14; 16, 17, 18) de blocage de la pièce supplémentaire par rapport à ladite aile (4) de la chape, adaptés pour immobiliser cette pièce supplémentaire sur l'aile correspondante dans chacune des positions choisies de la pièce supplémentaire par rapport à ladite aile (4).

2. Dérailleur suivant la revendication 1, dont la chape (2) comporte des moyens de liaison (6) de ses ailes (3, 4) à leur partie arrière, caractérisé en cè que lesdits moyens de liaison (6) assurent également l'articulation de ladite pièce supplémentaire (11; 15) sur ladite aile (4).

3. Dérailleur suivant l'une des revendications 1 et 2, caractérisé en ce que lesdits moyens de blocage de la pièce supplémentaire (11) par rapport à ladite aile, comprennent une lumière (12) ménagée dans ladite pièce supplémentaire (11), une tige filetée (13) fixée à l'aile (4) de la chape est engagée dans ladite lumière (12) et un écrou de blocage (14) coopérant avec ladite tige filetée (13).

4. Dérailleur suivant l'une des revendications 1 et 2, caractérisé en ce que lesdits moyens de blocage de la pièce supplémentaire (15) par rapport à ladite aile, comprennent une série de lumières (16) ménagées dans la pièce supplémentaire (15), disposées sur un cercle centré sur le point d'articulation (6) de la pièce supplémentaire (15), et un ressort de maintien élastique de la pièce supplémentaire (15) contre l'aile (4), l'extrémité (17) du ressort étant engagée dans une lumière (16) de la pièce supplémentaire (15) correspondant au réglage souhaité.

5. Dérailleur suivant la revendication 4, caractérisé en ce que ledit rassort de maintien de la pièce supplémentaire (15) contre l'aile (4) de la chape (2) est le ressort de rappel (10) du dérailleur, une branche (18) dudit ressort comportant un bec d'extrémité (17) qui coopère avec lesdites lumières (16) de la pièce supplémentaire (15).

6. Dérailleur suivant l'une quelconque des revendications 4 et 5, caractérisé en ce que la pièce supplémentaire (15) constitue par sa partie avant (19) en saillie par rapport à l'aile (4) de la chape, un élément élastique facilitant le déplacement transversal de la chaîne.

**Patentansprüche**

1. Tretkurbel-Gangschaltung für Fahrräder, umfassend ein Führungs- und Verstellorgan für die Kette in Form eines Bügels (2), welcher über seinen Mittelsteg gelenkig an einem Support (1) angeordnet ist, der zur Befestigung am Rahmen des Fahrrades dient, wobei zumindest einer (4) der Flansche des Bügels (2) einen verstellbaren Teil (11, 15) zur Anpassung der Breite dieses Flansches (4) an den Durchmesser des kleinen Zahnrades der Tretkurbel aufweist und wobei dieser verstellbare Teil durch ein Zusatzteil (11, 15) in Form einer platte gebildet ist, die um eine zur Achse der Tretkurbel parallele Achse an dem Flansch (4) des Bügels (2) in einem Punkt (6) desselben gelenkig angeordnet ist, dadurch gekennzeichnet, daß Mittel (12, 13, 14; 16, 17, 18) zum Feststellen des Zusatzteils gegenüber dem Flansch (4) des Bügels vorgesehen sind, welche dazu dienen, dieses Zusatzteil am zugeordneten Flansch in jeder gewählten Stellung dieses Zusatzteils relativ zum Flansch (4) zu fixieren.

2. Gangschaltung nach Anspruch 1, wobei der Bügel (2) Mittel (6) zum Verbinden seiner Flansche (3, 4) in deren hinteren Bereichen aufweist, dadurch gekennzeichnet, daß diese Verbindungsmittel (6) gleichzeitig als Gelenklagerung des Zusatzteils (11; 15) an diesem Flansch (4) dienen.

3. Gangschaltung nach einem der Ansprüche 1 und 2, dadurch gekennzeichnet, daß die Mittel zum Feststellen des Zusatzteils (11) gegenüber dem Flansch eine in diesem Zusatzteil (11) ausgebildete Ausnehmung (12) umfaßt und daß ein am Flansch (4) des Bügels befestigter Gewindebolzen (13) in diese Ausnehmung (12) eingreift, wobei eine Klemmschraube (14) mit dem Gewindebolzen (13) zusammenwirkt.

4. Gangschaltung nach einem der Ansprüche 1 und 2, dadurch gekennzeichnet, daß die Mittel zum Feststellen des Zusatzteils (15) gegenüber dem Flansch eine Anzahl von in dem Zusatzteil (15) ausgebildeten Ausnehmungen (16) umfaßt, welche entlang eines Kreisbogens um den Anlenkpunkt (6) des Zusatzteils (15) angeordnet sind, und daß eine elastische Feder zum Andrücken des Zusatzteils (15) gegen den Flansch (4) vorgesehen ist, wobei das Ende (17) des Feder in eine der gewünschten Einstellung entsprechende Ausnehmung (16) des Zusatzteils (15) eingreift.

5. Gangschaltung nach Anspruch 4, dadurch gekennzeichnet, daß die Feder zum Andrücken des Zusatzteils (15) gegen den Flansch (4) des Bügels (2) die Rückstellfeder (10) der Gangschaltung ist, wobei ein Arm (18) dieser Feder eine Endnase (17) aufweist, die mit den Ausnehmungen (16) des Zusatzteils (15) zusammenwirkt.

6. Gangschaltung nach einem der Ansprüche 4 und 5, dadurch gekennzeichnet, daß das Zusatzteil (15) in seinem vorderen, gegenüber dem Flansch (4) des Bügels vorspringenden Bereich (19) ein elastisches Element bildet, welches die Querverstellung der Kette erleichtert.

**Claims**

1. A derailleur of a crank-gear for a bicycle comprising a chain guiding and shifting member in the form of a fork member (2) pivoted at its web to a support (1) adapted to be fixed to the frame of the bicycle, at least one (4) of the wings of the fork member (2) having a part (11;15) which is adjustable in position so as to adapt the width of said one wing (4) to the diameter of the small chain wheel of the crank-gear, said part adjustable in position being formed by an additional member (11;15) in the form of a plate pivoted about an axis parallel to the axis of the crank-gear to said one wing (4) of the fork member at a point (6) thereof, characterized in that means (12,13,14; 16,17,18) are provided for securing the additional member relative to said one wing (4) of the fork member, adapted for immobilizing said additional member on the corresponding wing in each of the selected positions of the additional member relative to said one wing (4).

2. A derailleur according to claim 1, having a fork member (2) which comprises means (6) for interconnecting its wings (3, 4) in the rear part of the wings, wherein said interconnecting means (6) also provide for the pivoting of said additional member (11;15) on said one wing (4).

3. A derailleur according to one of claims 1 and 2, wherein said means for securing the additional member (11) relative to said one wing comprise an aperture (12) defined said additional member (11), a screwthreaded rod (13) fixed to said one wing (4) of the fork member and engaged in said aperture and a locking nut (14) cooperating with said screwthreaded rod (13).

4. A derailleur according to one of claims 1 and 2, wherein said means for securing the additional member (15) relative to said one wing comprise a series of apertures (16) defined in the additional member (15), located on a circle centered on the pivot point (6) of the additional memger (15) and a spring for elastically maintaining the additional member (15) against said one wing (4), the end portion (17) of the spring being engaged in an aperture (16) of the additional member (15) corresponding to the desired adjustment,

5. A derailleur according to claim 4, wherein said spring for maintaining the additional member (15) against said one wing (4) of the fork member (2) is a return spring (10) for the derailleur, one branch (18) of said spring comprising an end nose portion (17) which engages with said apertures (16) in the additional member.

6. A derailleur according to any one of claims 4 and 5, wherein the additional member(l5) constitutes by a front part (19) thereof, projecting relative to said wing (4) of the fork member, an elastically yieldable element which facilitates the transverse shifting of the chain.

FIG. 1

FIG. 2

FIG. 3